(19) Europäisches Patentamt
European Patent Office
Office européen des brevets

(11) **EP 4 488 242 A1**

(12) **EUROPEAN PATENT APPLICATION**
published in accordance with Art. 153(4) EPC

(43) Date of publication:
**08.01.2025 Bulletin 2025/02**

(21) Application number: **22929930.0**

(22) Date of filing: **28.10.2022**

(51) International Patent Classification (IPC):
**C03B 33/037** (2006.01)   **B23K 26/364** (2014.01)

(52) Cooperative Patent Classification (CPC):
**B23K 26/364; C03B 33/033; C03B 33/037;
C03B 33/09**

(86) International application number:
**PCT/JP2022/040328**

(87) International publication number:
**WO 2023/166786 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022 JP 2022032637**

(71) Applicant: **Nitto Denko Corporation
Ibaraki-shi, Osaka 567-8680 (JP)**

(72) Inventors:
• **YANO, Takanobu**
  **Ibaraki-shi, Osaka 567-8680 (JP)**
• **MORI, Takuya**
  **Ibaraki-shi, Osaka 567-8680 (JP)**
• **KANNO, Toshihiro**
  **Ibaraki-shi, Osaka 567-8680 (JP)**
• **HIRATA, Satoshi**
  **Ibaraki-shi, Osaka 567-8680 (JP)**

(74) Representative: **Hoffmann Eitle
Patent- und Rechtsanwälte PartmbB
Arabellastraße 30
81925 München (DE)**

(54) **BRITTLE MATERIAL CHIP, BRITTLE MATERIAL SHEET, METHOD FOR PRODUCING BRITTLE MATERIAL SHEET, AND METHOD FOR PRODUCING BRITTLE MATERIAL CHIP**

(57)     An objective of the present invention is to provide a brittle material chip and the like having excellent flexibility. The present invention is a brittle material chip 100 including a brittle material layer 1 formed of a brittle material. The brittle material chip 100 includes first processed marks 11 formed on one side in a thickness direction of the brittle material layer on at least one end surface of the brittle material layer and having depths of 1 $\mu$m or more and less than half the thickness of the brittle material layer and includes or does not include second processed marks 12 formed on the other side in the thickness direction on the end surface of the brittle material layer, facing the first processed marks 11 in the thickness direction, and having depths of less than 1 $\mu$m.

Figure 4

(a)

(b)

**Description**

[Technical Field]

The present invention relates to a brittle material chip including a brittle material layer formed of a brittle material, a brittle material sheet to be divided along a planned division line to form the brittle material chip, a method for producing a brittle material sheet, and a method for producing a brittle material chip. In particular, the present invention relates to a brittle material chip having excellent flexibility, a brittle material sheet having excellent flexibility, a method for producing a brittle material sheet, and a method for producing a brittle material chip.

[Background Art]

On an outermost surface side of an image display device used in a television, a personal computer, a smartphone, a smartwatch, an on-board display, or the like, a protective material for protecting the image display device is often disposed. As a typical protective material, a brittle material chip with a brittle material layer formed of a brittle material such as a glass is used.

The brittle material chip is formed from a prepared brittle material sheet having larger dimensions than the brittle material chip by dividing the brittle material sheet by laser machining or the like along predetermined planned division lines into a shape and dimensions suitable for its application.

Deformable flexible displays have recently been developed as image display devices. As brittle material chips to be used for the flexible displays, there is a demand for brittle material chips that have more sufficient flexibilities than conventional brittle material chips to be less likely to fracture by deformation.

However, according to findings made by the present inventors, it is found that a conventional brittle material chip may be formed with, on both sides in a thickness direction on its end surface (an end surface corresponding to a planned division line on a brittle material sheet), processed marks that are large and have a surface texture different from that of the other portion (a portion at a center in the thickness direction), and the processed marks cause a failure to obtain sufficient flexibility.

Non Patent Literature 1 describes a technique of processing glass with ultrashort pulsed laser light in which a filamentation phenomenon caused by the ultrashort pulsed laser light is utilized, and describes the application of a multi-focal optical system or a Bessel beam optical system to an ultrashort pulsed laser source.

Non Patent Literature 2 describes a two-point bending stress of a thin glass substrate.

[Citation List]

[Non Patent Literature]

[Non Patent Literature 1] John Lopez, et al., "GLASS CUTTING USING ULTRASHORT PULSED BESSEL BEAMS", [online], October 2015, International Congress on Applications of Lasers & Electro-Optics (ICALEO), [searched on July 17, 2020, the Internet (URL: https://www.researchgate.net/publication/284617626_GLASS_CUTTING_US ING_ULTRASHORT_PULSED_BESSEL_BEAMS)
[Non Patent Literature 2] Suresh T. Gulati, et al., "Two Point Bending of Thin Glass Substrate", 2011, SID 11 DIGEST, p.652-654

[Summary of Invention]

[Technical Problem]

The present invention has been made to solve the problems of related art as described above and has an objective to provide a brittle material chip having excellent flexibility, a brittle material sheet having excellent flexibility, a method for producing a brittle material sheet, and a method for producing a brittle material chip.

[Solution to Problem]

The present inventors conducted diligent studies to solve the problems. As a result, the present inventors found that when a brittle material chip including a brittle material layer includes first processed marks formed on one side in the thickness direction of the brittle material layer on at least one end surface of the brittle material layer and having depths of 1 µm or more and less than half the thickness of the brittle material layer and includes or does not include second processed marks formed on the other side in the thickness direction on the end surface of the brittle material layer, facing the first processed marks in the thickness direction, and having depths of less than 1 µm, the brittle material chip has a sufficient flexibility at such a level that there is no hindrance to using the brittle material chip for a flexible display or the like. Thus, the present inventors completed the present invention.

The present invention is completed based on findings made by the present inventors described above.

That is, in order to solve the problems, the present invention provides a brittle material chip with a brittle material layer formed of a brittle material, the brittle material chip: comprising first processed marks on one side in a thickness direction of the brittle material layer on at least one end surface of the brittle material layer, the first processed marks having depths of 1 µm or more and less than half a thickness of the brittle material layer; and comprising or not comprising second processed marks that are formed on another side in the thickness direction on the end surface of the brittle material layer, face the first processed marks in the thickness direction, and have depths of less than 1 µm.

In the present invention, the "depths" of the first processed marks and the second processed marks each mean a dimension in the thickness direction of the brittle material layer.

In the present invention, the phrase "formed on one side in the thickness direction of the brittle material layer on one end surface" means that the first processed marks are formed in such a manner as to extend from an edge of the one end surface on the one side in the thickness direction toward a center in the thickness direction. Likewise, the phrase "formed on the other side in the thickness direction on the end surface" means that the first processed marks are formed in such a manner as to extend from an edge of the one end surface on the other side in the thickness direction toward the center in the thickness direction.

In the present invention, the phrase "including first processed marks" is a concept that includes not only the case where the first processed marks are formed entirely on the one end surface of the brittle material layer continuously (integrally connected) in a direction perpendicular to the thickness direction but also the case where the first processed marks are formed continuously only partly in the direction perpendicular to the thickness direction and the case where the first processed marks are formed intermittently in the direction perpendicular to the thickness direction.

In the present invention, the phrase "having depths of 1 µm or more" means that, when a plurality of first processed marks are formed, the maximum value of their depths is 1 µm or more. Likewise, the phrase "having depths of less than 1 µm" means that, when a plurality of second processed marks are formed, the maximum value of their depths is 1 µm or less. Note that the first processed marks and the second processed marks are recognizable when an SEM image (a scanning electron microscope image) of the end surface of the brittle material layer is captured for example, as pixel regions having wide variations in shade of color (high contrast) or pixel regions having high luminance values (pixel values), and the dimensions of the pixel regions in a thickness direction (the thickness direction of the brittle material layer) can be determined as the depths of the first processed marks and the second processed marks.

The brittle material chip according to the present invention includes, on the one side in the thickness direction of the brittle material layer on at least the one end surface of the brittle material layer, the first processed marks having depths of 1 µm or more and less than half the thickness of the brittle material layer and includes or does not include the second processed marks formed on the other side in the thickness direction on the end surface of the brittle material layer, facing the first processed marks in the thickness direction, and having depths of less than 1 µm. Therefore, it is possible to provide a sufficient flexibility as the present inventors found. For this reason, the brittle material chip is less likely to fracture by deformation and can be suitably used as a protective material for a deformable image display device such as a flexible display.

In the brittle material chip according to the present invention, if the depths of the second processed marks are great, the flexibility of the brittle material chip is decreased.

Therefore, preferably, the second processed marks have depths of 100 nm or less.

In the brittle material chip according to the present invention, if the depths of the first processed marks are great, the flexibility of the brittle material chip is decreased.

Therefore, preferably, the first processed marks have depths of 10 µm or less.

In the brittle material chip according to the present invention, the difference between the maximum value and the minimum value of the depths of the first processed marks is preferably 3 µm or less.

In the brittle material chip according to the present invention, the minimum value of the depths of the first processed marks is preferably 0.5 µm or more. In this manner, the minimum value of the depths of the first processed marks being not 0 µm (in other words, the first processed marks are formed continuously in the direction perpendicular to the thickness direction on the one end surface of the brittle material layer) brings such an advantage that the brittle material sheet is easy to divide when the brittle material sheet is divided to produce the brittle material chip.

In the brittle material chip according to the present invention, preferably, the brittle material layer is formed of a glass and has a thickness of 100 µm or less.

Preferably, the brittle material chip according to the present invention is in a substantially rectangular shape in plan view, and the end surface including the first processed marks includes a pair of end surfaces corresponding to a pair of sides of the rectangular shape that at least face each other.

In the preferable configurations, the "substantially rectangular shape in plan view" is a concept that includes not only a case of a perfect rectangular shape as viewed from the thickness direction of the brittle material chip but also a case of a rectangular shape with its four corners being chamfered.

In the preferable configurations, the first processed marks are not limited to first processed marks formed entirely on a pair of end surfaces in the direction perpendicular to the thickness direction. For example, the first processed marks may be formed only on a portion that is to be bent in the use of the brittle material chip. For example, it is also possible to adopt a mode in which the first processed marks specified in the present invention (first processed marks having depths of 1 $\mu$m or more and less than half the thickness of the brittle material layer) are formed on a portion to be bent of the brittle material chip (the second processed marks have depths of less than 1 $\mu$m, or the second processed marks are not formed) so that the brittle material chip has a sufficient flexibility at the portion, and first processed marks having greater depths than the first processed marks specified in the present invention are formed on another portion so that the brittle material sheet is easy to divide when the brittle material sheet is divided to produce the brittle material chip.

In order to solve the problems, the present invention also provides a brittle material sheet that is divided along a planned division line to form the brittle material chip according to any one of claims 1 to 5, the brittle material sheet: comprising the first processed marks on a surface of the brittle material layer on one side in a thickness direction of the brittle material layer, the first processed marks being formed along the planned division line; and comprising or not comprising the second processed marks on a surface of the brittle material layer on another side in the thickness direction of the brittle material layer, the second processed marks being formed along the planned division line.

In the present invention, the phrase "including first processed marks formed along the planned division line" is a concept that includes not only the case where the first processed marks are formed continuously (integrally connected) entirely along the planned division line but also the case where the first processed marks are formed continuously only partly along planned division line and the case where the first processed marks are formed intermittently along the planned division line.

The first processed marks included in the brittle material sheet according to the present invention are processed marks that are opened on a surface of the brittle material layer on the one side in the thickness direction of the brittle material layer, extend toward the center of the brittle material layer in the thickness direction, and are non-penetrating, and the depths of the first processed marks are 1 $\mu$m or more and less than half the thickness of the brittle material layer. In the case where the brittle material sheet according to the present invention includes the second processed marks, the second processed marks are processed marks that are opened on a surface of the brittle material layer on the other side in the thickness direction of the brittle material layer, extend toward the center of the brittle material layer in the thickness direction, and are non-penetrating, and the depths of the second processed marks are less than 1 $\mu$m.

By dividing the brittle material sheet according to the present invention along the planned division line, the brittle material chip having an end surface that is at a location corresponding to the planned division line is formed, and the first processed marks formed on the end surface of the brittle material chip have depths 1 $\mu$m or more and less than half the thickness of the brittle material layer. In the case where the second processed marks are formed on the end surface, the depths of the second processed marks are less than 1 $\mu$m.

Preferably, the brittle material sheet according to the present invention comprises a resin material layer that is in contact with a surface of the brittle material layer on the one side with no gap and is formed of a resin material having a refractive index of which an absolute difference from a refractive index of the brittle material is 0.2 or less.

The preferable configuration reduces the reflection of the laser light on the interface between the brittle material layer and the resin material layer when the first processed marks are formed in the brittle material layer of the brittle material sheet using the ultrashort pulsed laser source as described later, thus providing such an advantage that second processed marks having great depths are less likely to be formed.

In the preferable configurations, for example, the resin material is a pressure sensitive adhesive.

In order to solve the problems, the present invention also provides a method for producing the brittle material sheet, the method comprising a processed mark forming step of disposing an ultrashort pulsed laser source in such a manner that the ultrashort pulsed laser source faces a surface of the brittle material layer of the brittle material sheet on the other side in the thickness direction, the brittle material sheet being a brittle material sheet before being formed with the first processed marks and the second processed marks, and forming the first processed marks on a surface of the brittle material layer on the one side in the thickness direction by applying laser light oscillated from the ultrashort pulsed laser source to the brittle material sheet along the planned division line on the brittle material sheet to partly remove the brittle material.

In the method for producing a brittle material sheet according to the present invention, the phrase "applying the laser light to the brittle material sheet along planned division line on the brittle material sheet" means that the laser light is applied to the brittle material sheet along planned division line as viewed from the thickness direction of the brittle material sheet.

By the method for producing a brittle material sheet according to the present invention, it is possible to form first processed marks having depths of 1 μm or more and less than half the thickness of the brittle material layer on the surface of the brittle material layer on the one side in the thickness direction (a surface on the opposite side to a surface on a side on which the ultrashort pulsed laser source is disposed (a surface on the other side in the thickness direction)) by adjusting the power of the laser light and the position of the focus of the laser light, and in the case where the second processed marks are formed, it is possible to reduce the depths of the second processed marks to less than 1 μm.

In the case where the brittle material sheet includes a resin material layer, in order to solve the problems, the present invention also provides a method for producing the brittle material sheet, the method comprising a processed mark forming step of disposing an ultrashort pulsed laser source in such a manner that the ultrashort pulsed laser source faces the brittle material layer of the brittle material sheet before being formed with the first processed marks and the second processed marks, and forming the first processed marks by applying laser light oscillated from the ultrashort pulsed laser source to the brittle material sheet along the planned division line on the brittle material sheet from the brittle material layer side of the brittle material sheet to partly remove the brittle material.

According to findings made by the present inventors, a possible reason that the second processed marks are formed is that the reflection of the laser light on the surface of the brittle material layer on the one side in the thickness direction (the surface on the opposite side to the surface on the side on which the ultrashort pulsed laser source is disposed) has a significant influence.

In the method for producing a brittle material sheet according to the present invention, since the absolute difference between the refractive index of the resin material layer in contact with the surface of the brittle material layer on the one side with no gap and the refractive index of the brittle material layer is 0.2 or less, the laser light incident on the brittle material layer from the ultrashort pulsed laser source is less likely to be reflected on the interface between the brittle material layer and the resin material layer. This provides such an advantage that second processed marks having great depths are less likely to be formed.

In the method for producing a brittle material sheet according to the present invention, preferably, the laser light applied to the brittle material sheet has a wavelength that is absorbed by the resin material layer and is not absorbed by the brittle material layer.

In the preferable method, the term "absorbed" means that the absorption coefficient of the wavelength of the laser light applied to the brittle material sheet is 0.03 or more, and the term "not absorbed" means that the absorption coefficient of the wavelength of the laser light applied to the brittle material sheet is less than 0.03.

In the method for producing a brittle material sheet according to the present invention, preferably, a focus of the laser light applied to the brittle material sheet is positioned at a position on a surface of the brittle material layer on an opposite side to a side on which the ultrashort pulsed laser source is disposed or at a position that is farther from the ultrashort pulsed laser source than the surface is.

According to findings made by the present inventors, the preferable method provides such an advantage that second processed marks having great depths are less likely to be formed even in the case where the brittle material layer has a small thickness, in other words, in the case where that the reflection of the laser light on the surface of the brittle material layer on the one side in the thickness direction (the surface on the opposite side to the surface on the side on which the ultrashort pulsed laser source is disposed) has a significant influence.

Note that the focus of the laser light is more preferably positioned at a position that is farther from the ultrashort pulsed laser source than the surface of the brittle material layer on the opposite side to the side on which the ultrashort pulsed laser source is disposed.

In the case where the brittle material sheet includes a resin material layer, in order to solve the problems, the present invention also provides a method for producing a brittle material chip, the method comprising: a peeling step of peeling off the resin material layer from the brittle material sheet; and a dividing step of dividing the brittle material sheet along the planned division line by applying external force to the brittle material sheet from which the resin material layer is peeled off, the external force producing a tension in the first processed marks.

Note that in the case where the brittle material sheet does not include the resin material layer, the peeling step is not needed, and it is possible to produce the brittle material chip only by the dividing step.

[Advantageous Effect of Invention]

According to the present invention, it is possible to provide a brittle material chip having excellent flexibility.

[Brief Description of Drawings]

[Figure 1] Figure 1 is an explanatory diagram schematically illustrating steps of a method for producing a brittle material chip according to an embodiment of the present invention.

[Figure 2] Figure 2 is an explanatory diagram schematically illustrating steps of a method for producing a brittle material chip according to an embodiment of the present invention.

[Figure 3] Figure 3 is an explanatory diagram schematically illustrating an example of a method for setting a focus of laser light oscillated from an ultrashort pulsed laser source shown in Figure 1.

[Figure 4] Figure 4 is a diagram schematically illustrating a configuration of a brittle material chip that is produced by a method for producing a brittle material chip according to an embodiment of the present invention.

[Figure 5] Figure 5 is a diagram schematically illustrating an outline of a test on a brittle material chip of Inventive Example 1.

[Figure 6] Figure 6 is an explanatory diagram schematically illustrating a dividing step of Inventive Example 1.

[Figure 7] Figure 7 is an explanatory diagram schematically illustrating samples used to measure the absorption coefficients.

[Figure 8] Figure 8 is a table showing an outline and results of a test on brittle material chips of Inventive Examples 1 and 2 and Comparative Examples 1 and 2.

[Figure 9] Figure 9 is a table showing an outline and results of a test on brittle material chips of Inventive Examples 3 and 4 and Comparative Examples 3 and 4.

[Figure 10] Figure 10 is a table showing an outline and results of a test on brittle material chips of Inventive Examples 5 to 9.

[Figure 11] Figure 11 is a table showing an outline and results of a test on brittle material chips of Comparative Examples 5 and 6.

[Figure 12] Figure 12 illustrates examples of SEM images of end surfaces of the brittle material chips of Comparative Example 3 and Inventive Example 4.

[Figures 13] Figure 13 is a diagram illustrating an example of an image obtained by performing image processing such as binarization on a SEM image of the brittle material chip of Inventive Example 4.

[Description of Embodiment]

A brittle material chip, a brittle material sheet, a method for producing a brittle material sheet, and a method for producing a brittle material chip according to an embodiment of the present invention will be described below with reference to the accompanying drawings as appropriate. A method for producing a brittle material chip according to the present embodiment will be first described.

[Method for Producing Brittle Material Chip]

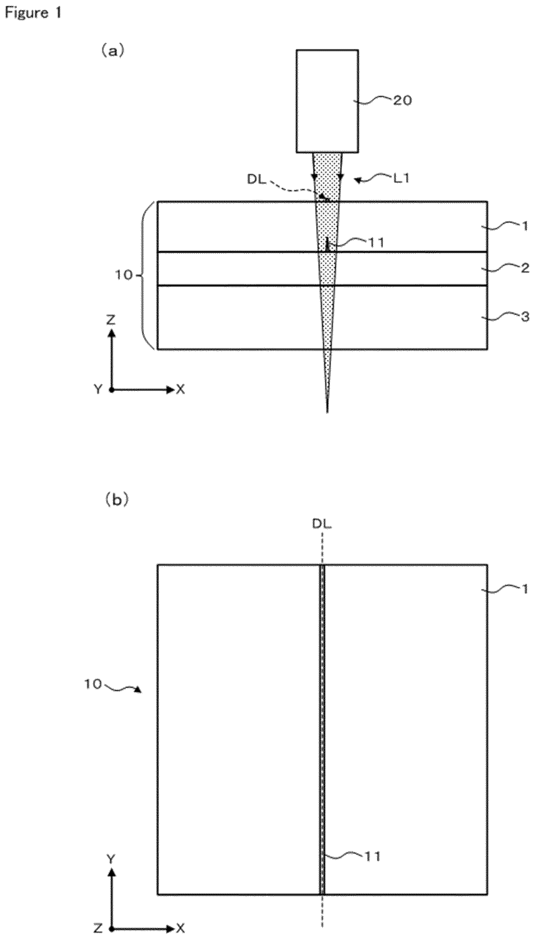

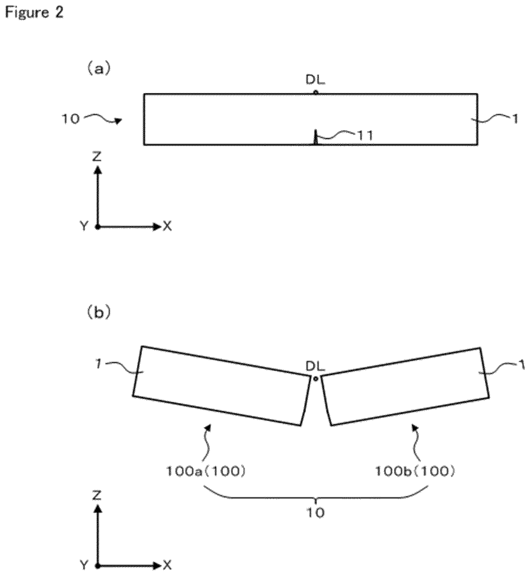

Figure 1 and Figure 2 are explanatory diagrams schematically illustrating steps of a method for producing a brittle material chip according to an embodiment of the present invention. Figure 1 is a diagram illustrating a processed mark forming step of the production method according to the present embodiment. Figure 1(a) is a sectional view, and Figure 1(b) is a plan view. Note that, in Figure 1(b), the illustration of an ultrashort pulsed laser source is omitted. Figures 2 is a diagram illustrating a peeling step and a dividing step of the production method according to the present embodiment. Figure 2(a) is a sectional view illustrating the peeling step, and Figure 2(b) is a sectional view illustrating the dividing step. Figure 1 and Figure 2 are provided for purposes of reference, and it should be noted that dimensions, scales, and shapes of members and the like illustrated in the figures may differ from reality. This holds true for other figures.

A brittle material chip 100 produced by the production method according to the present embodiment is produced by dividing a brittle material sheet 10.

As illustrated in Figure 1, the brittle material sheet 10 according to the present embodiment includes a brittle material layer 1 that is formed of a brittle material and a first resin material layer 2 (corresponding to a resin material layer according to the present invention) that is in contact with a surface of the brittle material layer 1 on one side in the thickness direction (an up-down direction, a Z direction in Figure 1) of the brittle material layer 1 (a lower side in the example illustrated in Figure 1) with no gap and is formed of a resin material having a refractive index of which an absolute difference from a refractive index of the brittle material is 0.2 or less. The brittle material sheet 10 according to the present embodiment also includes a second resin material layer 3 that is laminated on the brittle material layer 1 via the first resin material layer 2 and is formed of a resin material.

The brittle material layer 1, the first resin material layer 2, and the second resin material layer 3 are laminated together by any appropriate method. For example, the brittle material layer 1, the first resin material layer 2, and the second resin material layer 3 can be laminated together by what is called roll-to-roll processing. That is, the brittle material layer 1, the first resin material layer 2, and the second resin material layer 3 can be laminated together in such a manner as to convey the longer-length brittle material layer 1 and the longer-length second resin material layer 3 having a surface on which the first resin material layer 2 is formed are conveyed in their longitudinal directions, with their longitudinal directions aligned with one other. Alternatively, the brittle material layer 1 and the second resin material layer 3 can also be laminated together via the first resin material layer after being cut into a predetermined shape.

Examples of the brittle material for forming the brittle material layer 1 include a glass, and monocrystalline or polycrystalline silicon.

Examples of the glass can include soda-lime glass, borate glass, aluminosilicate glass, quartz glass, and sapphire glass, according to categorization by composition. According to categorization by alkaline component, examples of the glass can include an alkali-free glass and a low-alkali glass. The content of alkali metal components (e.g., $Na_2O$, $K_2O$, $Li_2O$) of the glass is preferably 15 wt% or less, and more preferably 10 wt% or less.

The thickness of the brittle material layer 1 is preferably 200 $\mu$m or less, more preferably 100 $\mu$m or less, further preferably 50 $\mu$m or less, and particularly preferably 30 $\mu$m or less. On the other hand, the thickness of the brittle material layer 1 is preferably 5 $\mu$m or more, and more preferably 10 $\mu$m or more. The thickness of the brittle material layer 1 within such a range enables the lamination with the second resin material layer 3 by the roll-to-roll processing.

In the case where the brittle material forming the brittle material layer 1 is a glass, the light transmittance of the brittle material layer 1 is preferably 85% or more at a wavelength of 550 nm. In the case where the brittle material forming the brittle material layer 1 is a glass, the refractive index of the brittle material layer 1 is preferably 1.4 to 1.65 at a wavelength of 550 nm. In the case where the brittle material forming the brittle material layer 1 is a glass, the density of the brittle material layer 1 is preferably 2.3 $g/cm^3$ to 3.0 $g/cm^3$, and more preferably 2.3 $g/cm^3$ to 2.7 $g/cm^3$.

In the case where the brittle material forming the brittle material layer 1 is a glass, a commercially available sheet glass may be directly used as the brittle material layer 1, or a commercially available sheet glass may be used as the brittle material layer 1 after being ground to a desired thickness. Examples of the commercially available sheet glass include "7059", 1737", or "EAGLE2000" from Corning Inc., "AN100" from AGC Inc., "NA-35" from NH Techno Glass Corporation, "G-Leaf" (R) or "OA-10" from Nippon Electric Glass Co., Ltd., and "D263" or "AF45" from SCHOTT AG.

As the resin material forming the first resin material layer 2, various types of pressure sensitive adhesives such as an acrylic-based pressure sensitive adhesive, a polyethylene-based pressure sensitive adhesive, a urethane-based pressure sensitive adhesive, and a silicone-based pressure sensitive adhesive can be used. Alternatively, various types of adhesives such as an epoxy-based adhesive may be used.

Examples of the second resin material layer 3 can include a single-layer film or a laminated film constituted by a plurality of layers that are each formed of an acrylic resin such as polyethylene terephthalate (PET), polyethylene (PE), polypropylene (PP), and polymethylmethacrylate (PMMA), or a plastic material such as cyclic olefin polymer (COP), cyclic olefin copolymer (COC), polycarbonate (PC), a urethane resin, polyvinyl alcohol (PVA), polyimide (PI), polytetrafluoroethylene (PTFE), polyvinyl chloride (PVC), polystyrene (PS), triacetylcellulose (TAC), polyethylene naphthalate (PEN), ethylene-vinyl acetate (EVA), polyamide (PA), a silicone resin, an epoxy resin, a liquid crystal polymer, and various types of resin foams.

In the case where the second resin material layer 3 is a laminated film formed of a plurality of layers, one of various types of pressure sensitive adhesives such as an acrylic-based pressure sensitive adhesive, a polyethylene-based pressure sensitive adhesive, a urethane-based pressure sensitive adhesive, and a silicone-based pressure sensitive adhesive, or one of various types of adhesive such as an epoxy-based adhesive may be interposed between the layers, as with the first resin material layer 2.

In addition, on a surface of the second resin material layer 3, a conductive inorganic film such as of indium tin oxide (ITO), Ag, Au, or Cu may be formed.

The thickness of the second resin material layer 3 is preferably 20 to 500 $\mu$m.

In the example illustrated in Figure 1, the brittle material sheet 10 includes both the first resin material layer 2 and the second resin material layer 3 as a preferable mode. However, the present invention is not limited to this. Even in the case where the brittle material sheet 10 includes neither the first resin material layer 2 nor the second resin material layer 3, in the case where the brittle material sheet 10 includes only the second resin material layer 3 (in the case where the brittle material layer 1 is laminated on the second resin material layer 3 via air or water), or in the case where the brittle material sheet 10 includes only the first resin material layer 2, the brittle material chip 100 can be produced using one of these brittle material sheets 10.

The production method according to the present embodiment for producing the brittle material chip 100 using the brittle material sheet 10 described above includes the processed mark forming step, the peeling step, and the dividing step. The steps will be described below in order.

<Processed Mark Forming Step>

As illustrated in Figure 1, in the processed mark forming step, an ultrashort pulsed laser source 20 is disposed in such a manner that the ultrashort pulsed laser source 20 faces the brittle material layer 1 of the brittle material sheet 10 before being formed with first processed marks and second processed marks described later (on an upper side of the brittle material layer 1 in the example illustrated in Figure 1(a)). Laser light (ultrashort pulsed laser light) L1 that is oscillated (pulse-oscillated) from the ultrashort pulsed laser source 20 is applied to the brittle material sheet 10 along a planned division line of the brittle material sheet 10 from the brittle material layer 1 side of the brittle material sheet 10 to partly remove brittle material forming the brittle material layer 1, thereby forming first processed marks 11. In the present embodiment, as illustrated in Figure 1(b), the first processed marks 11 are formed integrally connected along the planned division line. Note that, in Figure 1 and Figure 2, the illustration of second processed marks 12 described later that can be formed simultaneously with the first processed marks 11 is omitted.

The example illustrated in Figure 1 illustrates the case where the planned division line is a straight line DL, which extends in a Y direction out of two directions (an X direction and the Y direction) perpendicular to each other in a plane (in an XY two-dimensional plane) of the brittle material sheet 10. The planned division line DL can be actually drawn on the brittle material sheet 10 as a visually recognizable indication. Alternatively, coordinates of the planned division line DL can be input in advance into a controller (not illustrated) that controls a relative position relationship between the laser light L1 and the brittle material sheet 10 on the XY two-dimensional plane. The planned division line DL illustrated in Figure 1 is a virtual line of which coordinates are input in advance into the controller, and that is not actually drawn on the brittle material sheet 10. Note that the planned division line DL is not limited to a straight line and may be a curved line. By determining the planned division line DL in accordance with an application of the brittle material sheet 10, the brittle material sheet 10 can be divided into any shape suitable for the application.

As a mode of applying the laser light L1 to the brittle material sheet 10 along the planned division line DL of the brittle material sheet 10 (a mode of scanning with the laser light L1), it is conceivable, for example, to place and fix (e.g., suction fixation) the brittle material sheet 10 in a sheet shape on an XY two-axis stage (not illustrated) and drive the XY two-axis stage based on a control signal from the controller to change a relative position of the brittle material sheet 10 with respect to the laser light L1 on the XY two-dimensional plane. It is also conceivable to fix a position of the brittle material sheet 10 and deflect the laser light L1 oscillated from the ultrashort pulsed laser source 20 with a galvanometer mirror or a polygon mirror that is driven by a control signal from the controller to change a position of the laser light L1 applied to the brittle material sheet 10 on the XY two-dimensional plane. Furthermore, it is possible to use both scanning of the brittle material sheet 10 using the XY two-axis stage and scanning with the laser light L1 using the galvanometer mirror or the like.

The brittle material forming the brittle material layer 1 is partly removed by utilizing filamentation phenomenon caused by the laser light L1 oscillated from the ultrashort pulsed laser source 20 or by application of a multi-focal optical system (not illustrated) or a Bessel beam optical system (not illustrated) to the ultrashort pulsed laser source 20.

The utilization of the filamentation phenomenon caused by ultrashort pulsed laser light and the application of a multi-focal optical system or a Bessel beam optical system to the ultrashort pulsed laser source are described in Non Patent Literature 1 mentioned above. In addition, Trumpf, a German company, sells a product relating to glass processing based on the application of a multi-focal optical system to an ultrashort pulsed laser source. As described above, the utilization of the filamentation phenomenon caused by ultrashort pulsed laser light and the application of a multi-focal optical system or a Bessel beam optical system to the ultrashort pulsed laser source are known, and thus a further description thereof will be herein omitted.

The laser light L1 oscillated from the ultrashort pulsed laser source 20 and applied to the brittle material sheet 10 preferably has a wavelength that is absorbed by the first resin material layer 2 and is not absorbed by the brittle material layer 1. Specifically, the laser light L1 preferably has a wavelength of 500 nm or more to 2500 nm or less, with which the brittle material layer 1 shows a high light transmittance in the case where the brittle material forming the brittle material layer 1 is a glass. The pulse width of the laser light L1 is preferably 100 picoseconds or less and more preferably 50 picoseconds or less to effectively bring about nonlinear optical phenomena (multiphoton absorption). The pulse width of the laser light L1 is set to, for example, 350 femtoseconds or more to 10000 femtoseconds or less. A mode of the oscillation of the laser light L1 may be single-pulse oscillation or may be multi-pulse oscillation in a burst mode.

In the processed mark forming step, a focus of the laser light L1 oscillated from the ultrashort pulsed laser source 20 and applied to the brittle material sheet 10 is set to be positioned on a surface of the brittle material layer 1 on the opposite side (a lower side in the example illustrated in Figure 1(a)) to a side on which the ultrashort pulsed laser source 20 is disposed (i.e., an interface between the brittle material layer 1 and the first resin material layer 2 in the example illustrated in Figure 1(a)) or at a position that is farther from the ultrashort pulsed laser source 20 than the surface is (a position below the surface in the example illustrated in Figure 1(a)). In this manner, the first processed marks 11 formed in the processed mark forming step are processed marks that are opened on the first resin material layer 2 side, extend toward the center of the brittle material layer 1 in the thickness direction of the brittle material layer 1 (the Z direction), and are non-penetrating (not opened on the opposite side to the first resin material layer 2 side).

The mechanism of how the non-penetrating first processed marks 11 opened on the first resin material layer 2 side is formed is still unclear. However, the present inventors assume that, by setting the focus of the laser light L1 to a position on or below the interface between the brittle material layer 1 and the first resin material layer 2, the energy of the laser light L1 is concentratedly in the vicinity of the interface between the first resin material layer 2 and the brittle material layer 1 to generate heat, and the heat is conducted to the brittle material layer 1 where the brittle material is removed at heat-affected locations to form the first processed marks 11.

A method for setting the focus of the laser light L1 will be described below.

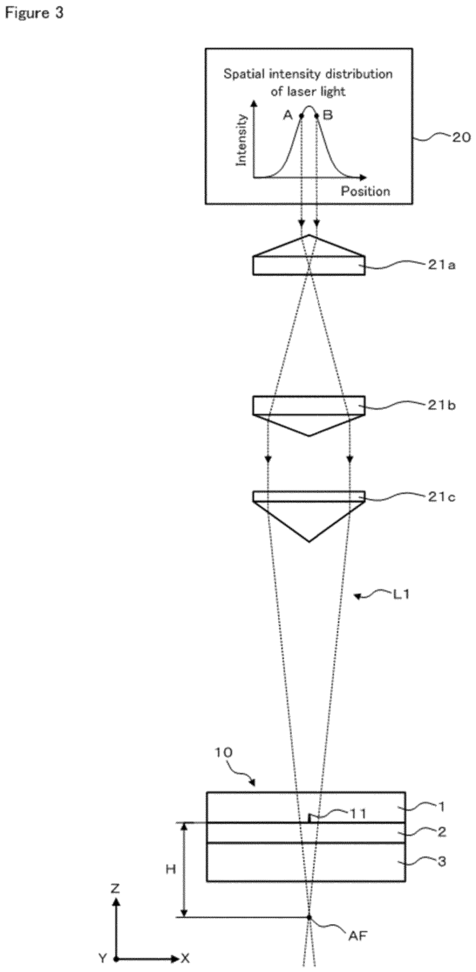

Figure 3 is an explanatory diagram schematically illustrating an example of the method for setting the focus of the laser light L1 oscillated from the ultrashort pulsed laser source 20.

In the example illustrated in Figure 3, a multi-focal optical system is applied to the ultrashort pulsed laser source 20. Specifically, the multi-focal optical system illustrated in Figure 3 includes three axicon lenses 21a, 21b, and 21c. As illustrated in Figure 3, when a spatial intensity distribution of the laser light L1 oscillated from the ultrashort pulsed laser source 20 is assumed to be a Gaussian distribution, the laser light L1 oscillated within a relatively-high-intensity range from a point A to a point B follows an optical path indicated by broken lines in Figure 3 and then converges at a focus AF. In the processed mark forming step of the present embodiment, the focus that is set in the vicinity of the interface between the first resin material layer 2 and the brittle material layer 1 is the focus AF at which the laser light L1 oscillated within the relatively-high-intensity range from the point A to the point B converges. The range from the point A to the point B is, for example, a range in which the intensity of the laser light L1 is 90% or more of the maximum intensity in the spatial intensity distribution of the laser light L1.

In the processed mark forming step, a position relationship between the focus AF and the brittle material sheet 10 is adjusted such that the position of the focus AF of the laser light L1 is positioned on or below the interface between the brittle material layer 1 and the first resin material layer 2 (specifically, at a position below the interface at a distance H ($H \geq 0$) from the interface). The distance H is preferably set to 0 $\mu$m to 800 $\mu$m, more preferably 50 $\mu$m to 600 $\mu$m, and further preferably 200 $\mu$m to 400 $\mu$m.

The spot diameter of the laser light L1 at the focus AF is preferably set to 5 $\mu$m or less and more preferably 3 $\mu$m or less.

In the case where the filamentation phenomenon caused by the laser light L1 is utilized, when the laser light L1 passes through the brittle material layer 1, the spot diameter decreases as the laser light L1 travels because the laser light L1 is made to self-focus by the Kerr effect. Then, when the laser light L1 converges to have an energy at an energy threshold at which ablation occurs in the brittle material layer 1, parts of the brittle material of the brittle material layer 1 are partly removed to form the first processed marks 11. As described above, by setting a position at which the laser light L1 converges to have the energy at the energy threshold at which ablation occurs (corresponding to the focus AF mentioned above, to a position on or below the interface between the brittle material layer 1 and the first resin material layer 2, it is possible to form the non-penetrating first processed marks 11 that are opened on the first resin material layer 2 side and extend toward the center of the brittle material layer 1 in the thickness direction of the brittle material layer 1 (the Z direction).

By adjusting the power of the laser light L1 oscillated from the ultrashort pulsed laser source 20 and the position of the focus AF (the distance H), it is possible to adjust the intensity of energy used for forming the first processed marks 11 (for removing brittle material) (the magnitudes of the intensities of the range from the point A to the point B). This enables adjustment of the depths of the first processed marks 11. In addition, even in the case where the second processed marks 12 described later are to be formed on a surface of the brittle material layer 1 on the opposite side to the interface between the brittle material layer 1 and the first resin material layer 2, it is possible to adjust the depths of the second processed marks 12 so as to reduce the depths.

Shallow depths of the first processed marks 11 can provide a sufficient flexibility to brittle material chips 100 formed by dividing the brittle material sheet 10, but on the other hand, excessively shallow depths of the first processed marks 11 constitute a hindrance to the division of the brittle material sheet 10 in the dividing step described later.

For this reason, the depths of the first processed marks 11 are 1 $\mu$m or more and less than half the thickness of the brittle material layer 1, and are preferably 10 $\mu$m or less. The shallower the depths of the first processed marks 11, the more preferable for providing the sufficient flexibility as long as the depths are 1 $\mu$m or more.

In the case where the second processed marks 12 are to be formed, if the depths of the second processed marks 12 are great, the flexibility of brittle material chips 100 formed by dividing the brittle material sheet 10 is decreased. For this reason, the depths of the second processed marks 12 are less than 1 $\mu$m and preferably 100 nm or less.

The processed mark forming step described above corresponds to the method for producing a brittle material sheet according to the present embodiment, and the brittle material sheet 10 after the processed mark forming step is executed corresponds to a brittle material sheet according to the present embodiment.

<Peeling Step>

The peeling step of the present embodiment is executed after the processed mark forming step.

As illustrated in Figure 2(a), in the peeling step, the first resin material layer 2 is peeled off from the brittle material sheet 10 formed with the first processed marks 11 (and the second processed marks 12 in some cases) using known peeling means such as a peeling roller. In the present embodiment, the second resin material layer 3 is also peeled off simultaneously with the first resin material layer 2, and the brittle material sheet 10 including only the brittle material layer 1 is produced as illustrated in Figure 2(a).

<Dividing Step>

The dividing step of the present embodiment is executed after the peeling step.

As illustrated in Figure 2(b), in the dividing step, the brittle material sheet 10 is divided along the planned division line DL by applying external force to the brittle material sheet 10 after the processed mark forming step and the peeling step. In the example illustrated in Figure 2(b), the brittle material sheet 10 is divided into two brittle material chips 100 (100a and 100b).

Examples of a method of applying the external force to the brittle material sheet 10 include causing mechanical breakage (making a mountain fold), heating a portion on and in the vicinity of the planned division line DL with infrared-region laser light, applying vibration with an ultrasound roller, and suctioning and pulling up with a suction cup. In the case where the brittle material sheet 10 is divided by making a mountain fold, bending deformation is preferably applied in such a manner that a side of the brittle material sheet 10 on which the first resin material layer 2 is positioned before the peeling step (a lower side of the brittle material sheet 10 in the example illustrated in Figure 2) becomes convex so that tensile strain develops in the first processed marks 11.

[Configuration of Brittle Material Chip]

A configuration of the brittle material chip according to the present embodiment will be described below.

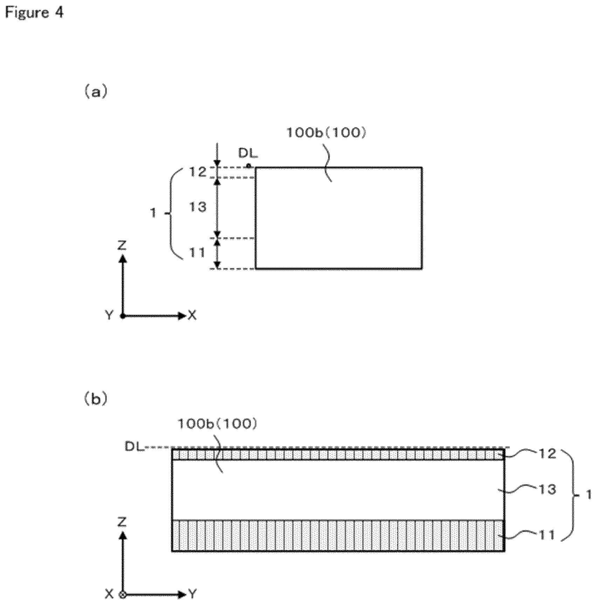

Figure 4 is a diagram schematically illustrating a configuration of a brittle material chip 100 (100b) that is produced by the production method according to the present embodiment (produced from the brittle material sheet 10 illustrated in Figure 1). Figure 4(a) is a side view viewed from the Y direction (a direction in which the planned division line DL extends), and Figure 4(b) is a side view viewed from the X direction (a direction perpendicular to the direction in which the planned division line DL extends).

As illustrated in Figure 4, the brittle material chip 100 includes the first processed marks 11 that are formed on one end surface (an end surface formed by the division) of the brittle material layer 1 of the brittle material chip 100 and on one side in the thickness direction of the brittle material layer 1 (the Z direction) (a lower side in the example illustrated in Figure 4). The brittle material chip 100 includes or does not include the second processed marks 12 that are formed on the other side in the thickness direction (the Z direction) on the one end surface of the brittle material layer 1 (an upper side in the example illustrated in Figure 4) and face the first processed marks 11 in the thickness direction. Note that a portion indicated with reference numeral 13 in Figure 4 is a portion that includes neither the first processed marks 11 nor the second processed marks 12.

As mentioned above, the depths of the first processed marks 11 formed in the brittle material sheet 10 in the processed mark forming step are 1 $\mu$m or more and less than half the thickness of the brittle material layer 1, and are preferably 10 $\mu$m or less. For this reason, the depths of the first processed marks 11 formed on the end surface of the brittle material chip 100 are also 1 $\mu$m or more and less than half the thickness of the brittle material layer 1, and are preferably 10 $\mu$m or less. The depths are more preferably 7 $\mu$m or less and further preferably 3 $\mu$m or less.

As mentioned above, the depths of the second processed marks 12 that can be formed in the brittle material sheet 10 in the processed mark forming step are less than 1 $\mu$m, and are preferably 100 nm or less. For this reason, the depths of the second processed marks 12 that can be formed on the end surface of the brittle material chip 100 are also less than 1 $\mu$m, and are preferably 100 nm or less. The first processed marks 11 and the second processed marks 12 are recognizable, when an SEM image of the end surface of the brittle material layer 1 is captured for example, as pixel regions having wide variations in shade of color (high contrast) or pixel regions having high luminance values (pixel values), and the dimensions of the pixel regions in a thickness direction (the thickness direction of the brittle material layer 1) can be determined as the depths of the first processed marks 11 and the second processed marks 12.

Figure 4(b) illustrates a state where both the first processed marks 11 and the second processed marks 12 are formed along the direction in which the planned division line DL extends (the Y direction) at substantially even depths. However, the present invention is not limited to this. The first processed marks 11 and/or second processed marks 12 each may have uneven depths. In addition, Figure 4(b) illustrates a state where both the first processed marks 11 and the second processed marks 12 are each formed continuously (integrally connected) entirely along the direction in which the planned division line DL extends (the Y direction). However, the present invention is not limited to this. The first processed marks 11 and/or the second processed marks 12 may be formed continuously only partly along the direction in which the planned division line DL extends (the Y direction) or may be formed intermittently along the direction in which the planned division line DL extends (the Y direction).

The brittle material chip 100 according to the present embodiment described above includes, on the one side in the thickness direction of the brittle material layer 1 on at least the one end surface of the brittle material layer 1, the first processed marks 11 having depths of 1 $\mu$m or more and less than half the thickness of the brittle material layer 1 and includes or does not include the second processed marks 12 formed on the other side in the thickness direction on the end surface of the brittle material layer 1, facing the first processed marks 11 in the thickness direction, and having depths of

less than 1 μm. Therefore, it is possible to provide a sufficient flexibility as the present inventors found. For this reason, the brittle material chip 100 is less likely to fracture by deformation and can be suitably used as a protective material for a deformable image display device such as a flexible display.

Hereafter, an example results of conducting a test for evaluating flexibilities and the like of brittle material chips 100 according to the present embodiment (Inventive Examples 1 to 9) and brittle material chips 100 according to comparative examples (Comparative Examples 1 to 6) will be described.

<Inventive Example 1>

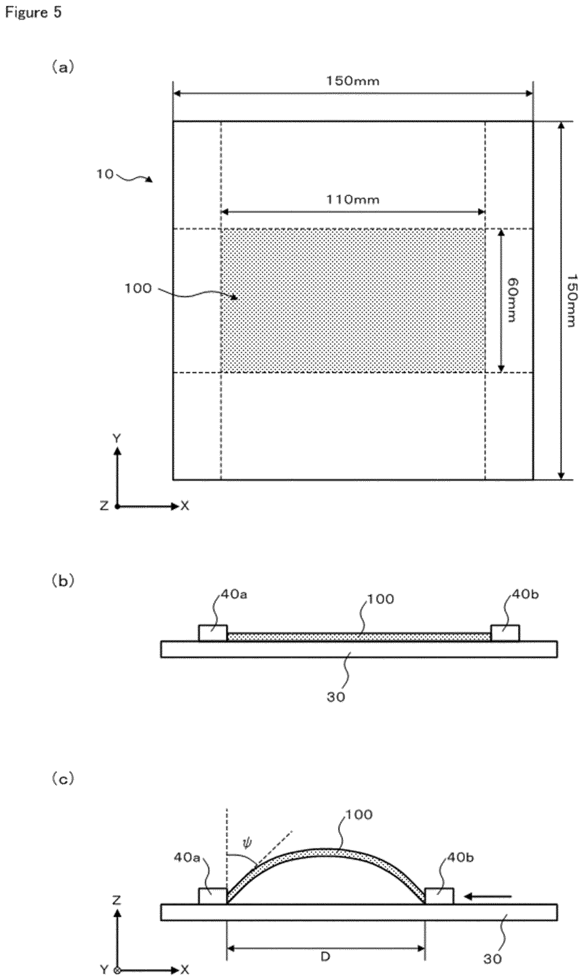

Figure 5 is a diagram schematically illustrating an outline of a test on a brittle material chip 100 of Inventive Example 1. Referring to Figure 5 as appropriate, the outline of the test on the brittle material chip 100 of Inventive Example 1 will be described.

In a brittle material sheet 10 used to produce the brittle material chip 100 of Inventive Example 1, a brittle material layer 1 is formed of an alkali-free glass (specifically, "G-Leaf" from Nippon Electric Glass Co., Ltd. (R)) and has a thickness of 100 μm. In addition, the brittle material sheet 10 does not include the first resin material layer 2, and the brittle material layer 1 is laminated, via air, on a second resin material layer 3 formed of a PET film (specifically, "DIAFOIL S100" from Mitsubishi Chemical Corporation) having a thickness of 50 μm. As illustrated in Figure 5(a), the brittle material sheet 10 is in a square shape with in-plane (in an XY two-dimensional plane) dimensions of 150 mm × 150 mm. Broken straight lines illustrated in Figure 5(a) are planned division lines.

In the processed mark forming step, "Monaco 1035-80-60" from Coherent, Inc. (oscillation wavelength: 1035 nm, pulse width of laser light L1: 350 to 10000 femtoseconds, repetition frequency of pulse oscillation 50 MHz at maximum, average power: 60 W) was used as the ultrashort pulsed laser source 20, and the laser light L1 oscillated from the ultrashort pulsed laser source 20 with a predetermined power (15 W) was applied via a multi-focal optical system to the brittle material sheet 10 from the brittle material layer 1 side. The power of the laser light L1 oscillated from the ultrashort pulsed laser source 20 was measured with the fan-cooled thermal sensor "FL400A-BB-50" from Ophir Optronics Solutions Ltd. The position of the focus AF of the laser light L1 was set to a lower surface of the brittle material layer 1 (i.e., the distance H = 0 μm). The relative moving speed of the laser light L1 to the brittle material sheet 10 (a processing speed) was set to 125 mm/sec, and the repetition frequency of the pulse oscillation was set to 125 kHz, and as illustrated in Figure 5(a), the brittle material sheet 10 was scanned with the laser light L1 along the planned division lines so that a brittle material chip 100 that is in a rectangular shape in plan view and has in-plane dimensions of 110 mm × 60 mm can be divided into. As a result, first processed marks 11 that have depths (maximum value) of 11 μm and were integrally connected were formed along the planned division lines on the lower surface side of the brittle material layer 1. In addition, second processed marks 12 having depths (maximum value) of 0.2 μm were formed along the planned division lines on the upper surface side of the brittle material layer 1.

In the dividing step, mountain folds were made on the brittle material sheet 10 along the planned division lines with a dividing jig such that the brittle material sheet 10 was convex on the first processed marks 11 side (concave on the second processed marks 12 side), and thus the brittle material chip 100 was divide into. Specifically, the dividing step is as follows.

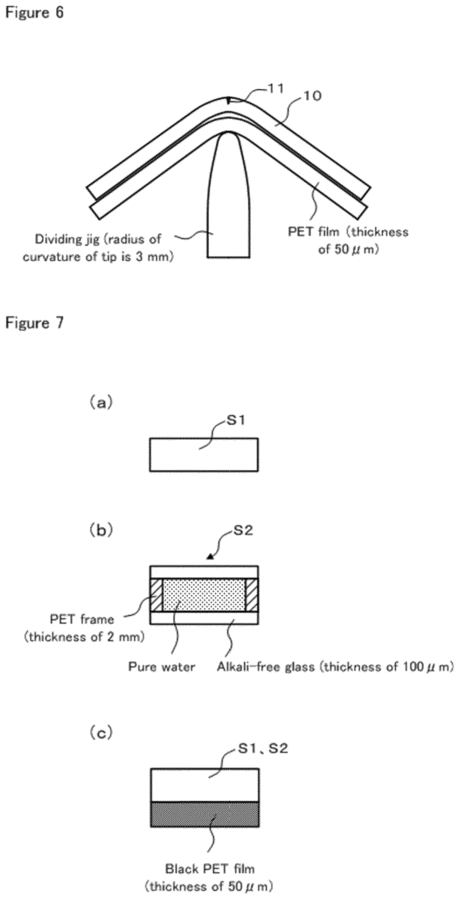

Figure 6 is an explanatory diagram schematically illustrating the dividing step of Inventive Example 1. As illustrated in Figure 6, in the dividing step, the dividing jig was disposed on an opposite side of the brittle material sheet 10 to the first processed marks 11, via a PET film to prevent scratches from being made. At this time, the dividing jig was disposed such that the tip of the dividing jig coincides with the first processed marks 11 as viewed from the thickness direction of the brittle material sheet 10. By bending the brittle material sheet 10 using the dividing jig as a fulcrum such that the brittle material sheet 10 is convex on the first processed marks 11 side, a tensile strain is placed at the first processed marks 11, thereby the brittle material chip 100 is divided into.

<Inventive Example 2>

Using the same brittle material sheet 10 as in Inventive Example 1, a brittle material chip 100 was produced under the same conditions as in Inventive Example 1 except that a brittle material layer 1 had a thickness of 50 μm.

The depths (maximum value) of first processed marks 11 were 9 μm, and the depths (maximum value) of second processed marks 12 were 0.15 μm.

<Comparative Example 1>

Using the same brittle material sheet 10 as in Inventive Example 1, a brittle material chip 100 was produced under the same conditions as in Inventive Example 1 except that a brittle material layer 1 had a thickness of 30 μm.

The depths (maximum value) of first processed marks 11 were 7 μm, and the depths (maximum value) of second processed marks 12 were 15 μm.

<Comparative Example 2>

Using a laminated body (specifically, the protective material for optical film "E-MASK RP207" from Nitto Denko Corporation) in which a first resin material layer 2 (having a thickness of 20 $\mu$m after drying) was formed by applying and drying an acrylic-based pressure sensitive adhesive on a second resin material layer 3, a brittle material chip 100 was produced under the same conditions as in Comparative Example 1 except that a brittle material sheet 10 used was such that a brittle material layer 1 was laminated on the first resin material layer 2 side of the laminated body.
The depths (maximum value) of first processed marks 11 were 9 $\mu$m, and the depths (maximum value) of second processed marks 12 were 6 $\mu$m.

<Comparative Example 3>

Using the same brittle material sheet 10 as in Comparative Example 1, a brittle material chip 100 was produced under the same conditions as in Comparative Example 1 except that the position of the focus AF of the laser light L1 applied to the brittle material sheet 10 was set to 50 $\mu$m below a lower surface of a brittle material layer 1 (i.e., the distance H = 50 $\mu$m).
The depths (maximum value) of first processed marks 11 were 3 $\mu$m, and the depths (maximum value) of second processed marks 12 were 11 $\mu$m.

<Inventive Example 3>

In the processed mark forming step, using the same brittle material sheet 10 as in Comparative Example 2, a brittle material chip 100 was produced under the same conditions as in Comparative Example 2 except that the position of the focus AF of the laser light L1 applied to the brittle material sheet 10 was set to 50 $\mu$m below a lower surface of a brittle material layer 1 (i.e., the distance H = 50 $\mu$m).
The depths (maximum value) of first processed marks 11 were 5 $\mu$m, and the depths (maximum value) of second processed marks 12 were 0.6 $\mu$m.

<Inventive Example 4>

Using a laminated body (specifically, the surface protection film "TORETEC (R) 7832C" from TORAY ADVANCED FILM Co., Ltd.) in which a first resin material layer 2 was laminated on a second resin material layer 3 by applying and drying a polyethylene-based pressure sensitive adhesive on the second resin material layer 3 (a total thickness of the first resin material layer 2 and the second resin material layer 3 was 30$\mu$m after the drying), a brittle material chip 100 was produced under the same conditions as in Inventive Example 3 except that a brittle material sheet 10 used was such that a brittle material layer 1 was laminated on the first resin material layer 2 side of the laminated body.
The depths (maximum value) of first processed marks 11 were 6 $\mu$m, and the depths (maximum value) of second processed marks 12 were 0.1 $\mu$m.

<Comparative Example 4>

A brittle material chip 100 was produced under the same conditions as in Comparative Example 3 except that a brittle material sheet 10 in which a brittle material layer 1 was laminated on a second resin material layer 3 via water (pure water). The water used was produced with the pure water system "Purelite PR-0100SG" from ORGANO CORPORATION.
The depths (maximum value) of first processed marks 11 were 3 $\mu$m, and the depths (maximum value) of second processed marks 12 were 7 $\mu$m.

<Inventive Example 5>

In the processed mark forming step, the power of the ultrashort pulsed laser source 20 was set to 41 W, and using the same brittle material sheet 10 as in Inventive Example 3, a brittle material chip 100 was produced under the same conditions as in Inventive Example 3 except that the position of the focus AF of the laser light L1 applied to the brittle material sheet 10 was set to 370 $\mu$m below a lower surface of a brittle material layer 1 (i.e., the distance H = 370 $\mu$m).
The depths (maximum value) of first processed marks 11 were 2 $\mu$m, and second processed marks 12 were not formed.

<Inventive Example 6>

In the processed mark forming step, the power of the ultrashort pulsed laser source 20 was set to 41 W, and using the same brittle material sheet 10 as in Inventive Example 4, a brittle material chip 100 was produced under the same conditions as in Inventive Example 4 except that the position of the focus AF of the laser light L1 applied to the brittle material sheet 10 was set to 370 $\mu$m below a lower surface of a brittle material layer 1 (i.e., the distance H = 370 $\mu$m).
The depths (maximum value) of first processed marks 11 were 2.5 $\mu$m, and second processed marks 12 were not formed.

<Inventive Example 7>

In the processed mark forming step, the power of the ultrashort pulsed laser source 20 was set to 41 W, and using the same brittle material sheet 10 as in Comparative Example 4, a brittle material chip 100 was produced under the same conditions as in Comparative Example 4 except that the position of the focus AF of the laser light L1 applied to the brittle material sheet 10 was set to 370 $\mu$m below a lower surface of a brittle material layer 1 (i.e., the distance H = 370 $\mu$m).
The depths (maximum value) of first processed marks 11 were 1.5 $\mu$m, and second processed marks 12 were not formed.

<Inventive Example 8>

In the processed mark forming step, the power of the ultrashort pulsed laser source 20 was set to 41 W, and using the same brittle material sheet 10 as in Comparative Example 3, a brittle material chip 100 was produced under the same conditions as in Comparative Example 3 except that the position of the focus AF of the laser light L1 applied to the brittle material sheet 10 was set to 370 $\mu$m below a lower surface of a brittle material layer 1 (i.e., the distance H = 370 $\mu$m).
The depths (maximum value) of first processed marks 11 were 1.5 $\mu$m, and the depths (maximum value) of second processed marks 12 were 0.1 $\mu$m.

<Inventive Example 9>

Using the same brittle material sheet 10 as in Inventive Example 5, a brittle material chip 100 was produced under the same conditions as in Inventive Example 5 except that a brittle material layer 1 had a thickness of 50 $\mu$m.
The depths (maximum value) of first processed marks 11 were 2 $\mu$m, and second processed marks 12 were not formed.

<Comparative Example 5>

In the processed mark forming step, the power of the ultrashort pulsed laser source 20 was set to 15 W, and using the same brittle material sheet 10 as in Inventive Example 8, a brittle material chip 100 was produced under the same conditions as in Inventive Example 8 except that the position of the focus AF of the laser light L1 applied to the brittle material sheet 10 was set to 220 $\mu$m above a lower surface of a brittle material layer 1 (i.e., the distance H = -220 $\mu$m).
First processed marks 11 were not formed, and the depths (maximum value) of second processed marks 12 were 20 $\mu$m.

<Comparative Example 6>

In the processed mark forming step, the power of the ultrashort pulsed laser source 20 was set to 15 W, and using the same brittle material sheet 10 as in Inventive Example 5, a brittle material chip 100 was produced under the same conditions as in Inventive Example 5 except that the position of the focus AF of the laser light L1 applied to the brittle material sheet 10 was set to 220 $\mu$m above a lower surface of a brittle material layer 1 (i.e., the distance H = -220 $\mu$m).
The depths (maximum value) of first processed marks 11 were 0.2 $\mu$m, and the depths (maximum value) of second processed marks 12 were 20 $\mu$m.

<Details of Evaluation>

The brittle material chips 100 obtained in Inventive Examples 1 to 9 and Comparative Examples 1 to 6 described above were evaluated for their flexibilities (specifically, bending strengths). In addition, the brittle material sheets 10 were evaluated for their dividing properties in dividing the brittle material sheets 10 into the brittle material chips 100. Further, their brittle material layers 1, the first resin material layers 2, and water were also evaluated for their refractive indices and absorption coefficients. The details of their evaluation items will be described below.

(Refractive Index)

Using the high-speed rotating compensator ellipsometer "M-2000" from J.A. Woollam, the refractive indices of the brittle material layers 1 and the first resin material layers 2 of Inventive Examples 1 to 9 and Comparative Examples 1 to 6, and water were measured.

Specifically, the refractive indices at a wavelength of 1035 nm, which is the oscillation wavelength of the ultrashort pulsed laser source 20, were measured with the beam diameter of incident light being set to about 2 mm $\times$ 8 mm, the incident angle of the incident light being set to 50°, 60°, and 70°, the wavelength of the incident light being set to 700 nm to 1680 nm for the measurement of the refractive indices of the first resin material layers 2, and the wavelength of the incident light being set to 400 nm to 1680 nm for the measurement of the refractive indices of the brittle material layers 1 and the water. As analysis software, CompleteEASE was used.

(Absorption Coefficient)

Using the spectrophotometer "U-4100" from Hitachi, Ltd., the absorption coefficients of the brittle material layers 1 and the first resin material layers 2 of Inventive Examples 1 to 9 and Comparative Examples 1 to 6, and the water were measured. A wavelength in a near infrared region such as a wavelength of 1035 nm, which is the oscillation wavelength of the ultrashort pulsed laser source 20 is less absorbed. Therefore, to measure the absorption coefficients of the brittle material layers 1, the first resin material layers 2, and the water, their samples having a thickness of about 1 to 2 mm were prepared, and their transmittances were measured as described later. To the values of the measured transmittances, the reflectivities of their surfaces were more contributory than their absorptivities. Therefore, the reflectivities of their surfaces were measured together, and corrected transmittances that are the addition of the measured transmittances and the reflectivities of the surfaces (corrected transmittance = transmittance + reflectivity of surface) were calculated. With Formula (1) shown below, absorbances A were calculated, and by dividing the absorbances A by the thicknesses of the samples, the absorption coefficients were calculated.

$$A = -\log_{10}(\text{corrected transmittance}) \quad (1)$$

Figure 7 is an explanatory diagram schematically illustrating samples used to measure the absorption coefficients. Figure 7(a) is a schematic diagram of a sample used to measure the transmittances of the brittle material layers 1 and the first resin material layers 2, Figure 7(b) is a schematic diagram of a sample used to measure the transmittance of the water, and Figure 7(c) is a schematic diagram of a sample used to measure the reflectivities of the surfaces of the brittle material layers 1, the first resin material layers 2, and the water.

As illustrated in Figure 7(a), when the transmittances of the brittle material layers 1 were measured, their samples S1 each having a thickness of about 2.3 mm were prepared by bonding together 20 sheets of alkali-free glass (G-Leaf) (R) each having a thickness of 100 $\mu$m with acrylic-based pressure sensitive adhesives each having a thickness of 15 $\mu$m. Then, the samples S1 were irradiated with light from above, and their transmittances were measured.

As illustrated in Figure 7(a), when the transmittances of the first resin material layers 2 (acrylic-based pressure sensitive adhesives) were measured, their samples S1 each having a thickness of 1 mm were prepared by bonding together 50 pressure sensitive adhesive layers each being the protective material for optical film "E-MASK RP207" and having a thickness of 20 $\mu$m. Then, the samples S1 were irradiated with light from above, and their transmittances were measured.

As illustrated in Figure 7(a), when the transmittances of the first resin material layers 2 (polyethylene-based pressure sensitive adhesives) were measured, their samples S1 each having a thickness of about 1 mm were prepared by bonding together 35 surface protection films "TORETEC (R) 7832C" having a total thickness of 30 $\mu$m. Then, the samples S1 were irradiated with light from above, and their transmittances were measured.

As illustrated in Figure 7(b), when the transmittance of the water is measured, a sample S2 having a thickness of 2.2 mm was prepared by preparing a PET frame having a thickness of 2 mm with a PET-made sheet, filling the PET frame with water (pure water), covering the PET frame with lids as window members made of alkali-free glass (G-Leaf (R) having a thickness of 100 $\mu$m). Then, the sample S2 was irradiated with light from above, and its transmittance was measured.

When the reflectivities of surfaces of the samples S1 and S2 were measured, black PET films (Lumirror (R) X30 from Toray Industries, Inc.) each having a thickness of 50 $\mu$m were disposed under the samples S1 and S2, the samples S1 and S2 were irradiated with light from above, and the reflectivities of their surfaces were measured.

(Dividing Properties)

Ten samples of the brittle material sheets 10 in each of Inventive Examples 1 to 9 and Comparative Examples 1 to 6 were prepared, and their dividing properties were evaluated based on the number of samples that were able to be appropriately divided along planned division lines DL. In the results of a test described later, " ◎" means that nine or more samples were able to be divided, "O" means that seven or more to eight or fewer samples were able to be divided, "△" means that five or more to six or fewer samples were able to be divided, and "×" means that only four or fewer samples were able to be divided.

(Flexibility)

To evaluate flexibilities (bending strengths), the brittle material chips 100 were subjected to a two-point bending test. In the two-point bending test, as illustrated in Figure 5(b), first, the brittle material chip 100 was placed on a fixing part 30 of a uniaxial stage that includes the fixing part 30 and movable parts 40a and 40b and sandwiched between the movable parts 40a and 40b. At this time, in order to conduct the two-point bending test by moving the movable part 40b for both the case where the brittle material chip 100 is bent to be concave on its first processed marks 11 side and the case where the brittle material chip 100 is bent to be convex on its first processed marks 11 side, a plurality of brittle material chips 100 produced under the same conditions were prepared, and the brittle material chips 100 were placed on the fixing part 30 with fronts and backs of some of the brittle material chips 100 being reversed. Subsequently, as illustrated in Figure 5(c), with the position of the movable part 40a being fixed, the movable part 40b was moved toward the movable part 40a at a speed of 20 mm/min, thereby causing a bending stress to act in the brittle material chip 100. Then, the bending strength of the brittle material chip 100 was evaluated based on a value of an interval D between the movable part 40a and the movable part 40b when the brittle material chip 100 fractures.

Specifically, from the interval D, the radius of curvature of the brittle material chip 100 was calculated geometrically. In addition, the interval D was substituted into Formula (3) described in Non Patent Literature 2 (the same formula as Formula (2) shown below) to calculate a maximum stress $\sigma_{max}$, which was evaluated as the bending strength.
[Expression 1]

$$\sigma_{max} = 1.198 \left( \frac{Et}{D-t} \right) (\cos \psi)^{1/2} \quad \cdots (2)$$

In Formula (2) shown above, E denotes the Young's modulus of the brittle material chip 100, t denotes the thickness of the brittle material chip 100, $\psi$ denotes the angle formed by a tangent line of the brittle material chip 100 at its end and a vertical direction (the Z direction).

As the Young's modulus E of the brittle material chip 100, the Young's modulus of the brittle material layer 1, 73 GPa, was used.

The angle $\psi$ was calculated based on an image captured immediately before the fracture of the brittle material chip 100 that was obtained by capturing the brittle material chip 100 from the Y direction illustrated in Figure 5(c) in such a manner that one end of the brittle material chip 100 is positioned within a visual field while the two-point bending test was conducted.

<Test Results>

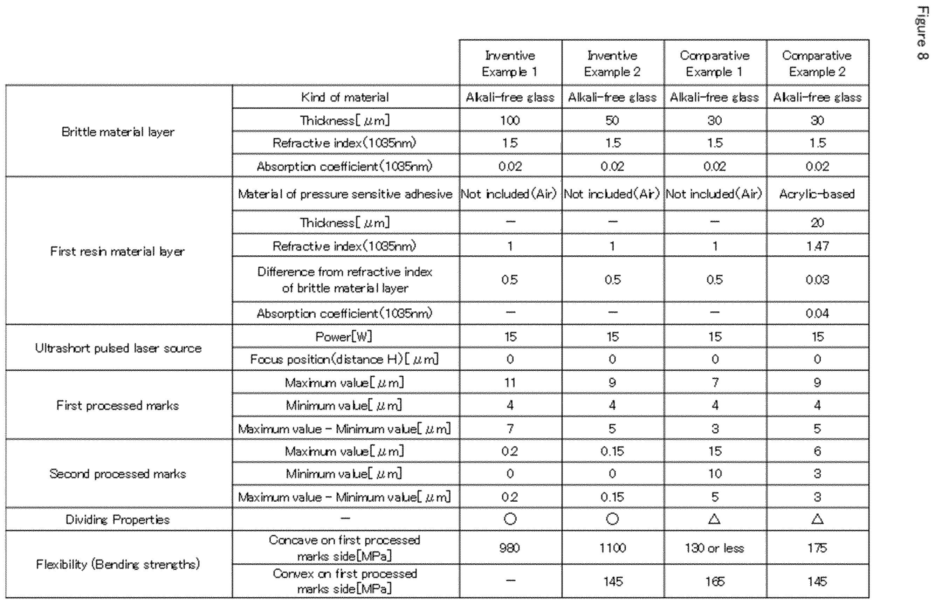

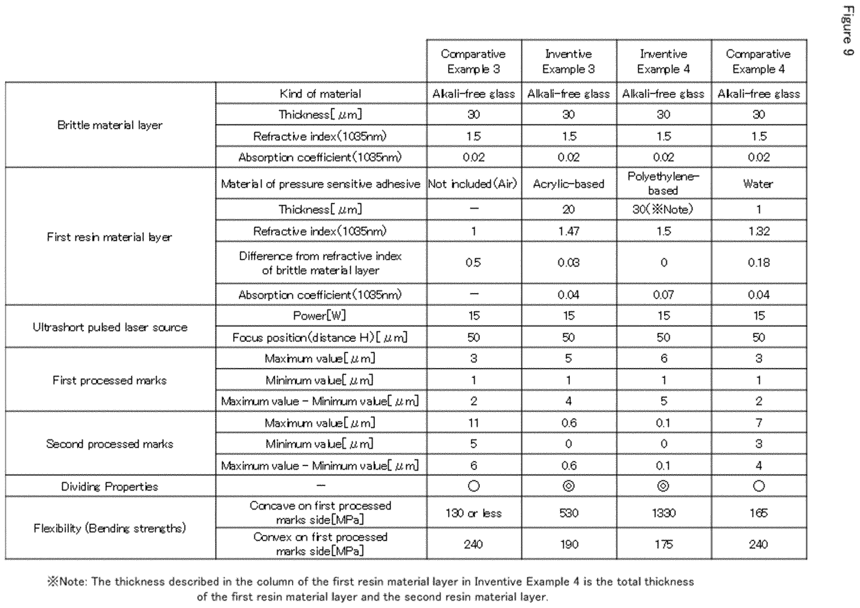

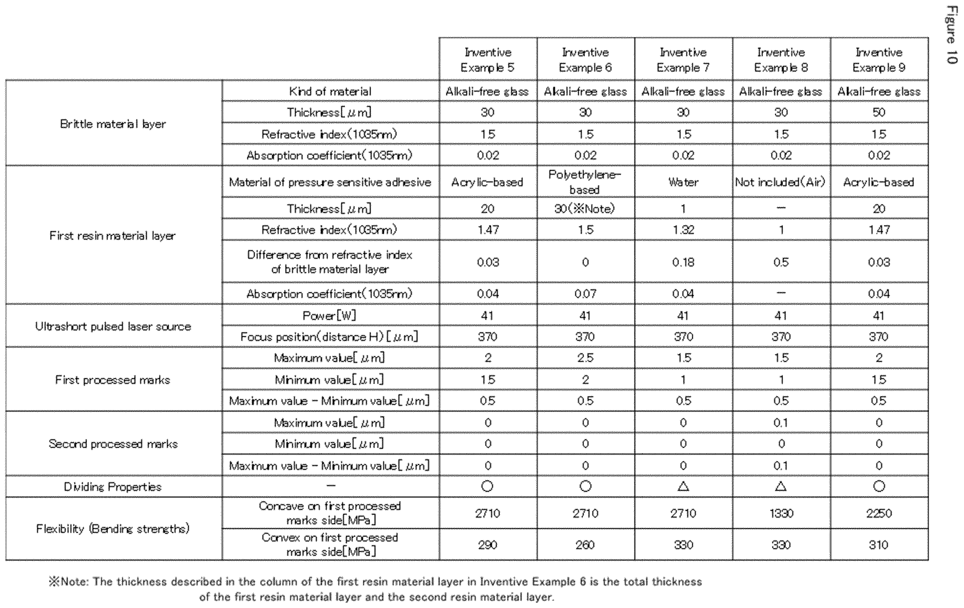

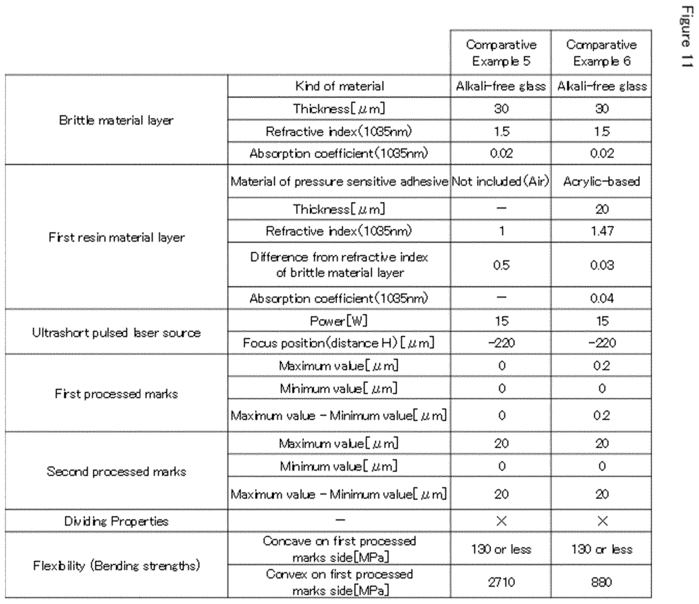

Figure 8 to Figure 11 were tables showing an outline and results of the test on the brittle material chips 100 of Inventive Examples 1 to 9 and Comparative Examples 1 to 6 described above.

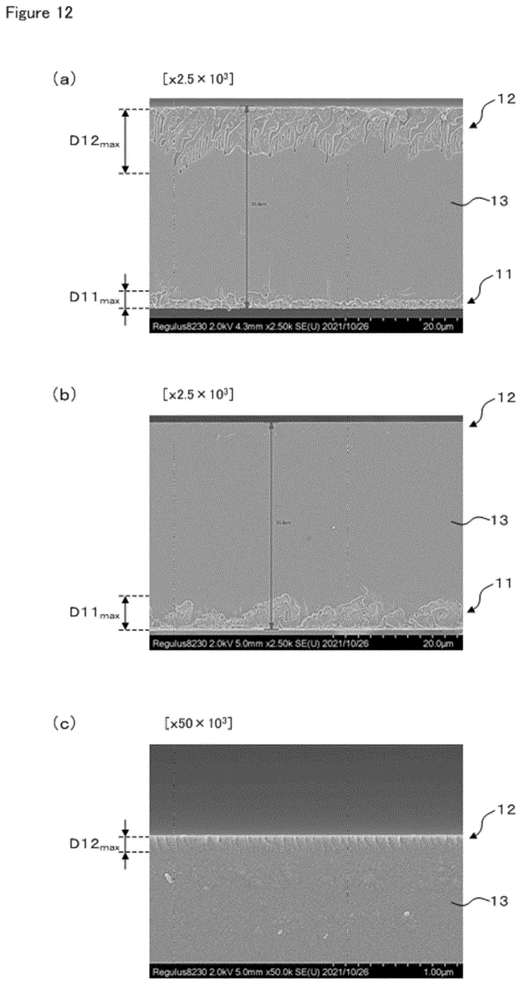

Figure 12 illustrates examples of SEM images of end surfaces of the brittle material chips 100 of Comparative Example 3 and Inventive Example 4. Figure 12(a) illustrates an example of an SEM image (magnification: x2.5 × 10³) of the brittle material chip 100 of Comparative Example 3, Figure 12(b) illustrates an example of a SEM image (magnification: x2.5 × 10³) of the brittle material chip 100 of Inventive Example 4, and Figure 12(c) illustrates an example of a SEM image (magnification: x50 × 10³) of the brittle material chip 100 of Inventive Example 4. The SEM images illustrated in Figure 12 was captured by detecting secondary electrons using the ultrahigh-resolution field emission scanning electron microscope "Regulus8230" from Hitachi High-Tech Corporation with its acceleration voltage being set to 2 kV.

As understood from Figure 12, the first processed marks 11 and the second processed marks 12 are recognizable as pixel regions having wide variations in shade of color (high contrast) or pixel regions having high luminance values (pixel values), and the dimensions of the pixel regions in a thickness direction (the thickness direction of the brittle material chips 100, an up-down direction in Figure 12) can be determined as the depths of the first processed marks 11 and the second processed marks 12. $D11_{max}$ illustrated in Figure 12 are the maximum values of the depths of the first processed

marks 11, and $D12_{max}$ illustrated in Figures 12 are the maximum values of the depths of the second processed marks 12.

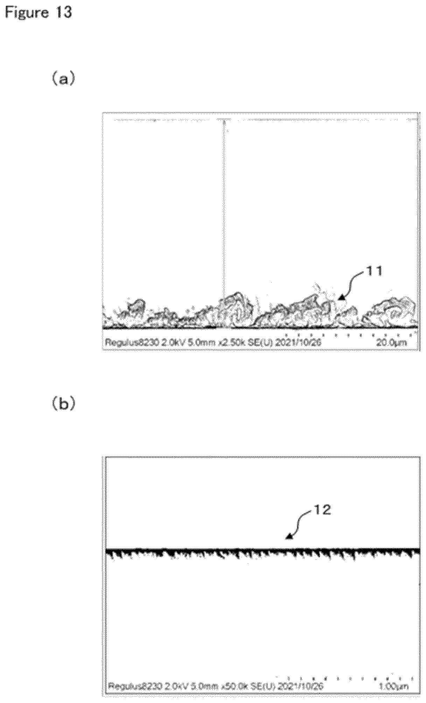

Figure 13 is a diagram illustrating an example of an image obtained by performing image processing such as binarization on a SEM image of the brittle material chip 100 of Inventive Example 4. Figure 13(a) is an image obtained by subjecting the SEM image (magnification: x2.5 $\times$ 10³) of the brittle material chip 100 of Inventive Example 4 illustrated in Figure 12(b) to binarization processing that extracts pixel regions having luminance values higher than a predetermined threshold and then known noise removal processing such as small area removal processing or isolated point removal processing. Figure 13(b) is an image obtained by subjecting the SEM image (magnification: x50 $\times$ 10³) of the brittle material chip 100 of Inventive Example 4 illustrated in Figure 12(c) to binarization processing that extracts pixel regions having luminance values higher than a predetermined threshold and then known noise removal processing such as small area removal processing or isolated point removal processing. The depth $D11_{max}$ of the first processed marks 11 and the depth $D12_{max}$ of the second processed marks 12 mentioned above may be determined by a person who visually checks the SEM images illustrated in Figure 12. However, by using the images as illustrated in Figure 13, it is possible to automatically determine the depth $D11_{max}$ of the first processed marks 11 and the depth $D12_{max}$ of the second processed marks 12 based on coordinates in an up-down direction of the pixel regions (pixel regions indicated in black color in Figure 13) that are extracted by the binarization processing and the noise removal processing with a known image processing device.

As shown in Figure 8 to Figure 11, the bending strengths of the brittle material chips 100 of Inventive Examples 1 to 9 that were bent with their first processed marks 11 sides being concave (this is a normal usage of the brittle material chips 100) were all 500 MPa or more, whereas the bending strengths of the brittle material chips 100 of Comparative Examples 1 to 6 that were bent with their first processed marks 11 sides being concave were 175 MPa at most. Therefore, it was confirmed that the brittle material chips 100 of Inventive Examples 1 to 9 provide sufficient flexibilities compared with the brittle material chips 100 of Comparative Examples 1 to 6.

Of the brittle material chips 100 of Inventive Examples 1 to 9, the brittle material chips 100 of Inventive Examples 4 to 9, in which the position of the focus AF of the laser light L1 was set to H = 50 $\mu$m to 400 $\mu$m in the processed mark forming step, had bending strengths (bending strengths when the brittle material chips 100 were bent with their first processed marks 11 side being concave) of 1330 MPa or more. Therefore, the brittle material chips 100 of Inventive Examples 4 to 9 are considered to be particularly preferable from the viewpoint of flexibility.

In addition, Inventive Examples 3 and 4, in which the position of the focus AF of the laser light L1 was set to H = 50 $\mu$m in the processed mark forming step, and their brittle material sheets 10 were provided with the first resin material layers 2 (acrylic-based pressure sensitive adhesive or polyester-based pressure sensitive adhesive) were evaluated as "◎." Therefore, Inventive Examples 3 and 4 are considered to be particularly preferable from the viewpoint of dividing properties. In contrast, in Comparative Examples 1 and 2, since the depths of both the first processed marks 11 and the second processed marks 12 were great, there were cases in the division where their brittle material sheets 10 failed to be appropriately divided along the planned division lines DL (divided at a portion other than the planned division lines DL), and thus Comparative Examples 1 and 2 were evaluated as "△." In Comparative Examples 5 and 6, since there were no first processed marks 11 produced (depths of 0 $\mu$m in Comparative Example 5) or the depths of the first processed marks 11 were significantly shallow (depths of 0.2 $\mu$m in Comparative Example 6), there were cases where their brittle material sheets 10 failed to be divided, and thus Comparative Examples 5 and 6 were evaluated as "×".

[Reference Signs List]

1 brittle material layer
2 resin material layer (first resin material layer)
3 second resin material layer
10 brittle material sheet
11 first processed mark
12 second processed mark
20 ultrashort pulsed laser source
100, 100a, 100b brittle material chip
AF focus
DL planned division line
L1 laser light

**EP 4 488 242 A1**

**Claims**

1. A brittle material chip with a brittle material layer formed of a brittle material, the brittle material chip:

   comprising first processed marks on one side in a thickness direction of the brittle material layer on at least one end surface of the brittle material layer, the first processed marks having depths of 1 $\mu$m or more and less than half a thickness of the brittle material layer; and
   comprising or not comprising second processed marks that are formed on another side in the thickness direction on the end surface of the brittle material layer, face the first processed marks in the thickness direction, and have depths of less than 1 $\mu$m.

2. The brittle material chip according to claim 1, wherein the second processed marks have depths of 100 nm or less.

3. The brittle material chip according to claim 1 or 2, wherein the first processed marks have depths of 10 $\mu$m or less.

4. The brittle material chip according to any one of claims 1 to 3, wherein the brittle material layer is formed of a glass and has a thickness of 100 $\mu$m or less.

5. The brittle material chip according to any one of claims 1 to 4, wherein

   the brittle material chip is in a substantially rectangular shape in plan view, and
   the end surface including the first processed marks includes a pair of end surfaces corresponding to a pair of sides of the rectangular shape that at least face each other.

6. A brittle material sheet that is divided along a planned division line to form the brittle material chip according to any one of claims 1 to 5, the brittle material sheet:

   comprising the first processed marks on a surface of the brittle material layer on one side in a thickness direction of the brittle material layer, the first processed marks being formed along the planned division line; and
   comprising or not comprising the second processed marks on a surface of the brittle material layer on another side in the thickness direction of the brittle material layer, the second processed marks being formed along the planned division line.

7. The brittle material sheet according to claim 6, comprising a resin material layer that is in contact with a surface of the brittle material layer on the one side with no gap and is formed of a resin material having a refractive index of which an absolute difference from a refractive index of the brittle material is 0.2 or less.

8. The brittle material sheet according to claim 7, wherein the resin material is a pressure sensitive adhesive.

9. A method for producing the brittle material sheet according to claim 6, the method comprising a processed mark forming step of disposing an ultrashort pulsed laser source in such a manner that the ultrashort pulsed laser source faces a surface of the brittle material layer of the brittle material sheet on the other side in the thickness direction, the brittle material sheet being a brittle material sheet before being formed with the first processed marks and the second processed marks, and forming the first processed marks on a surface of the brittle material layer on the one side in the thickness direction by applying laser light oscillated from the ultrashort pulsed laser source to the brittle material sheet along the planned division line on the brittle material sheet to partly remove the brittle material.

10. A method for producing the brittle material sheet according to claim 7 or 8, the method comprising a processed mark forming step of disposing an ultrashort pulsed laser source in such a manner that the ultrashort pulsed laser source faces the brittle material layer of the brittle material sheet before being formed with the first processed marks and the second processed marks, and forming the first processed marks by applying laser light oscillated from the ultrashort pulsed laser source to the brittle material sheet along the planned division line on the brittle material sheet from the brittle material layer side of the brittle material sheet to partly remove the brittle material.

11. The method for producing the brittle material sheet according to claim 10, wherein the laser light applied to the brittle material sheet has a wavelength that is absorbed by the resin material layer and is not absorbed by the brittle material layer.

12. The method for producing the brittle material sheet according to any one of claims 9 to 11, wherein a focus of the laser light applied to the brittle material sheet is positioned at a position on a surface of the brittle material layer on an opposite side to a side on which the ultrashort pulsed laser source is disposed or at a position that is farther from the ultrashort pulsed laser source than the surface is.

13. A method for producing a brittle material chip, the method comprising:

a peeling step of peeling off the resin material layer from the brittle material sheet produced by the method according to claim 10 or 11; and
a dividing step of dividing the brittle material sheet along the planned division line by applying external force to the brittle material sheet from which the resin material layer is peeled off, the external force producing a tension in the first processed marks.

Figure 1

(a)

(b)

Figure 2

(a)

DL

10

Z
Y —→X

11

1

(b)

1

DL

1

100a(100)

100b(100)

10

Z
Y —→X

Figure 3

Figure 4

(a)

(b)

Figure 5

(a)

150mm

110mm

10

100

60mm

150mm

Y

Z → X

(b)

40a

100

40b

30

(c)

100

ψ

40a

40b

Z

Y

X

D

30

Figure 6

Dividing jig (radius of
curvature of tip is 3 mm)

PET film (thickness
of 50 $\mu$ m)

Figure 7

(a)

S1

(b)

S2

PET frame
(thickness of 2 mm)

Pure water     Alkali-free glass (thickness of 100 $\mu$ m)

(c)

S1、S2

Black PET film
(thickness of 50 $\mu$ m)

Figure 8

| | | Inventive Example 1 | Inventive Example 2 | Comparative Example 1 | Comparative Example 2 |
|---|---|---|---|---|---|
| Brittle material layer | Kind of material | Alkali-free glass | Alkali-free glass | Alkali-free glass | Alkali-free glass |
| | Thickness[$\mu$m] | 100 | 50 | 30 | 30 |
| | Refractive index(1035nm) | 1.5 | 1.5 | 1.5 | 1.5 |
| | Absorption coefficient(1035nm) | 0.02 | 0.02 | 0.02 | 0.02 |
| First resin material layer | Material of pressure sensitive adhesive | Not included(Air) | Not included(Air) | Not included(Air) | Acrylic-based |
| | Thickness[$\mu$m] | — | — | — | 20 |
| | Refractive index(1035nm) | 1 | 1 | 1 | 1.47 |
| | Difference from refractive index of brittle material layer | 0.5 | 0.5 | 0.5 | 0.03 |
| | Absorption coefficient(1035nm) | — | — | — | 0.04 |
| Ultrashort pulsed laser source | Power[W] | 15 | 15 | 15 | 15 |
| | Focus position(distance H)[$\mu$m] | 0 | 0 | 0 | 0 |
| First processed marks | Maximum value[$\mu$m] | 11 | 9 | 7 | 9 |
| | Minimum value[$\mu$m] | 4 | 4 | 4 | 4 |
| | Maximum value - Minimum value[$\mu$m] | 7 | 5 | 3 | 5 |
| Second processed marks | Maximum value[$\mu$m] | 0.2 | 0.15 | 15 | 6 |
| | Minimum value[$\mu$m] | 0 | 0 | 10 | 3 |
| | Maximum value - Minimum value[$\mu$m] | 0.2 | 0.15 | 5 | 3 |
| Dividing Properties | — | ○ | ○ | △ | △ |
| Flexibility (Bending strengths) | Concave on first processed marks side[MPa] | 980 | 1100 | 130 or less | 175 |
| | Convex on first processed marks side[MPa] | — | 145 | 165 | 145 |

EP 4 488 242 A1

25

Figure 9

| | | Comparative Example 3 | Inventive Example 3 | Inventive Example 4 | Comparative Example 4 |
|---|---|---|---|---|---|
| Brittle material layer | Kind of material | Alkali-free glass | Alkali-free glass | Alkali-free glass | Alkali-free glass |
| | Thickness[μm] | 30 | 30 | 30 | 30 |
| | Refractive index(1035nm) | 1.5 | 1.5 | 1.5 | 1.5 |
| | Absorption coefficient(1035nm) | 0.02 | 0.02 | 0.02 | 0.02 |
| First resin material layer | Material of pressure sensitive adhesive | Not included (Air) | Acrylic-based | Polyethylene-based | Water |
| | Thickness[μm] | — | 20 | 30(※Note) | 1 |
| | Refractive index(1035nm) | 1 | 1.47 | 1.5 | 1.32 |
| | Difference from refractive index of brittle material layer | 0.5 | 0.03 | 0 | 0.18 |
| | Absorption coefficient(1035nm) | — | 0.04 | 0.07 | 0.04 |
| Ultrashort pulsed laser source | Power[W] | 15 | 15 | 15 | 15 |
| | Focus position(distance H)[μm] | 50 | 50 | 50 | 50 |
| First processed marks | Maximum value[μm] | 3 | 5 | 6 | 3 |
| | Minimum value[μm] | 1 | 1 | 1 | 1 |
| | Maximum value − Minimum value[μm] | 2 | 4 | 5 | 2 |
| Second processed marks | Maximum value[μm] | 11 | 0.6 | 0.1 | 7 |
| | Minimum value[μm] | 5 | 0 | 0 | 3 |
| | Maximum value − Minimum value[μm] | 6 | 0.6 | 0.1 | 4 |
| Dividing Properties | — | — | ○ | ◎ | ○ |
| Flexibility (Bending strengths) | Concave on first processed marks side[MPa] | 130 or less | 530 | 1330 | 165 |
| | Convex on first processed marks side[MPa] | 240 | 190 | 175 | 240 |

※Note: The thickness described in the column of the first resin material layer in Inventive Example 4 is the total thickness of the first resin material layer and the second resin material layer.

Figure 10

| | | Inventive Example 5 | Inventive Example 6 | Inventive Example 7 | Inventive Example 8 | Inventive Example 9 |
|---|---|---|---|---|---|---|
| Brittle material layer | Kind of material | Alkali-free glass | Alkali-free glass | Alkali-free glass | Alkali-free glass | Alkali-free glass |
| | Thickness[μm] | 30 | 30 | 30 | 30 | 50 |
| | Refractive index(1035nm) | 1.5 | 1.5 | 1.5 | 1.5 | 1.5 |
| | Absorption coefficient(1035nm) | 0.02 | 0.02 | 0.02 | 0.02 | 0.02 |
| First resin material layer | Material of pressure sensitive adhesive | Acrylic-based | Polyethylene-based | Water | Not included(Air) | Acrylic-based |
| | Thickness[μm] | 20 | 30(※Note) | 1 | — | 20 |
| | Refractive index(1035nm) | 1.47 | 1.5 | 1.32 | 1 | 1.47 |
| | Difference from refractive index of brittle material layer | 0.03 | 0 | 0.18 | 0.5 | 0.03 |
| | Absorption coefficient(1035nm) | 0.04 | 0.07 | 0.04 | — | 0.04 |
| Ultrashort pulsed laser source | Power[W] | 41 | 41 | 41 | 41 | 41 |
| | Focus position(distance H)[μm] | 370 | 370 | 370 | 370 | 370 |
| First processed marks | Maximum value[μm] | 2 | 2.5 | 1.5 | 1.5 | 2 |
| | Minimum value[μm] | 1.5 | 2 | 1 | 1 | 1.5 |
| | Maximum value – Minimum value[μm] | 0.5 | 0.5 | 0.5 | 0.5 | 0.5 |
| Second processed marks | Maximum value[μm] | 0 | 0 | 0 | 0.1 | 0 |
| | Minimum value[μm] | 0 | 0 | 0 | 0 | 0 |
| | Maximum value – Minimum value[μm] | 0 | 0 | 0 | 0.1 | 0 |
| Dividing Properties | — | ○ | ○ | △ | △ | ○ |
| Flexibility (Bending strengths) | Concave on first processed marks side[MPa] | 2710 | 2710 | 2710 | 1390 | 2250 |
| | Convex on first processed marks side[MPa] | 290 | 260 | 330 | 330 | 310 |

※Note: The thickness described in the column of the first resin material layer in Inventive Example 6 is the total thickness of the first resin material layer and the second resin material layer.

Figure 11

EP 4 488 242 A1

| | | Comparative Example 5 | Comparative Example 6 |
|---|---|---|---|
| Brittle material layer | Kind of material | Alkali-free glass | Alkali-free glass |
| | Thickness[$\mu$m] | 30 | 30 |
| | Refractive index(1035nm) | 1.5 | 1.5 |
| | Absorption coefficient(1035nm) | 0.02 | 0.02 |
| First resin material layer | Material of pressure sensitive adhesive | Not included(Air) | Acrylic-based |
| | Thickness[$\mu$m] | — | 20 |
| | Refractive index(1035nm) | 1 | 1.47 |
| | Difference from refractive index of brittle material layer | 0.5 | 0.03 |
| | Absorption coefficient(1035nm) | — | 0.04 |
| Ultrashort pulsed laser source | Power[W] | 15 | 15 |
| | Focus position(distance H)[$\mu$m] | −220 | −220 |
| First processed marks | Maximum value[$\mu$m] | 0 | 0.2 |
| | Minimum value[$\mu$m] | 0 | 0 |
| | Maximum value − Minimum value[$\mu$m] | 0 | 0.2 |
| Second processed marks | Maximum value[$\mu$m] | 20 | 20 |
| | Minimum value[$\mu$m] | 0 | 0 |
| | Maximum value − Minimum value[$\mu$m] | 20 | 20 |
| Dividing Properties | — | × | × |
| Flexibility (Bending strengths) | Concave on first processed marks side[MPa] | 130 or less | 130 or less |
| | Convex on first processed marks side[MPa] | 2710 | 880 |

Figure 12

(a) [×2.5 × 10³]

(b) [×2.5 × 10³]

(c) [×50 × 10³]

Figure 13

(a)

(b)

## INTERNATIONAL SEARCH REPORT

| International application No. |
|---|
| **PCT/JP2022/040328** |

**A. CLASSIFICATION OF SUBJECT MATTER**

*C03B 33/037*(2006.01)i; *B23K 26/364*(2014.01)i
FI: C03B33/037; B23K26/364

According to International Patent Classification (IPC) or to both national classification and IPC

**B. FIELDS SEARCHED**

Minimum documentation searched (classification system followed by classification symbols)

C03B33/00-33/14; B23K26/00-26/70; B28D1/00-7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-203607 A (NANOPLUS LTD.) 08 December 2016 (2016-12-08) | 1-5 |
|   | claims, paragraphs [0001], [0029], [0031], [0048], [0049], fig. 1, 9 | |
| A |   | 6-13 |
| X | WO 2021/070442 A1 (NIPPON ELECTRIC GLASS CO., LTD.) 15 April 2021 (2021-04-15) | 1-2, 5-6 |
|   | paragraphs [0047]-[0055], fig. 6-10 | |
| A |   | 3-4, 7-13 |
| X | JP 2016-108158 A (MITSUBOSHI DIAMOND INDUSTRIAL CO., LTD.) 20 June 2016 (2016-06-20) | 1-2, 5-6 |
|   | claims, paragraphs [0034]-[0042], fig. 1, 5, 6 | |
| A |   | 3-4, 7-13 |
| A | WO 2019/138967 A1 (NITTO DENKO CORP.) 18 July 2019 (2019-07-18) | 1-13 |
|   | claims, examples, drawings | |
| A | JP 2017-141133 A (MITSUBISHI CHEMICAL CORP.) 17 August 2017 (2017-08-17) | 1-13 |
|   | claims, examples, drawings | |

☐ Further documents are listed in the continuation of Box C.　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2023** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/040328**

| Patent document cited in search report | | | Publication date (day/month/year) | Patent family member(s) | | | Publication date (day/month/year) |
|---|---|---|---|---|---|---|---|
| JP | 2016-203607 | A | 08 December 2016 | EP 3085487 A1 claims, paragraphs [0002], [0028], [0030], [0042], [0043], fig. 1, 9 | | | |
| WO | 2021/070442 | A1 | 15 April 2021 | (Family: none) | | | |
| JP | 2016-108158 | A | 20 June 2016 | CN 105645752 A | | | |
| | | | | KR 10-2016-0066492 A | | | |
| WO | 2019/138967 | A1 | 18 July 2019 | EP 3738709 A1 claims, examples, drawings | | | |
| | | | | US 2020/0353567 A1 | | | |
| | | | | CN 111587161 A | | | |
| | | | | KR 10-2020-0105827 A | | | |
| | | | | JP 2019-122966 A | | | |
| JP | 2017-141133 | A | 17 August 2017 | (Family: none) | | | |

Form PCT/ISA/210 (patent family annex) (January 2015)

**REFERENCES CITED IN THE DESCRIPTION**

**Non-patent literature cited in the description**

- **JOHN LOPEZ et al.** GLASS CUTTING USING ULTRASHORT PULSED BESSEL BEAMS. *International Congress on Applications of Lasers & Electro-Optics (ICALEO)*, October 2015, https://www.researchgate.net/publication/284617626_GLASS_-CUTTING_US ING_ULTRASHORT_PULSED_-BESSEL_BEAMS

- **SURESH T. GULATI et al.** Two Point Bending of Thin Glass Substrate. *SID 11 DIGEST*, 2011, 652-654